# EUROPÄISCHE PATENTSCHRIFT

(11) **EP 1 298 034 B1**
(45) Veröffentlichungstag und Bekanntmachung des Hinweises auf die Patenterteilung: **09.08.2006**
(21) Anmeldenummer: 02021732.9
(22) Anmeldetag: 25.09.2002
(51) Int. Cl.: B62D 65/00, B62D 29/04, B60R 13/02, B62D 25/06

(54) **Dachteil, insbesondere Innenhimmel für ein Fahrzeugdach, und Verfahren zu seiner Herstellung**
Roof part , especially internal lining for a vehicle roof , and method of its production
Elément de toit, notamment habillage de plafond d'un toit de véhicule, et sa méthode de fabrication

(30) Priorität: 26.09.2001 DE 10147327
(43) Veröffentlichungstag der Anmeldung: 02.04.2003
(73) Patentinhaber: ArvinMeritor GmbH, 63128 Dietzenbach (DE)
(72) Erfinder: Lutz, Markus, 38518 Gifhorn (DE); Röder, Joachim, 63165 Mühlheim (DE); Niebuhr, Frank, 38518 Gifhorn (DE); Stehning, Kai, 61250 Usingen (DE)
(74) Vertreter: Sties, Jochen

(56) Entgegenhaltungen:
- EP-A- 0 306 923
- US-A- 5 975 625

## Beschreibung

Die Erfindung betrifft ein Dachteil, insbesondere einen Innenhimmel für ein Fahrzeugdach, mit einer Trägerschicht, die aus einem ausgehärteten Material besteht und eine Montagestruktur aufweist. Die Erfindung betrifft ferner ein Verfahren zur Herstellung eines solchen Dachteils für ein Fahrzeug.

Die Montagestruktur kann dazu dienen, am Dachteil beispielsweise den Innenhimmel des Fahrzeugs zu befestigen. Falls es sich bei dem Dachteil um den Innenhimmel des Fahrzeugs handelt, kann die Montagestruktur dazu dienen, diesen am Fahrzeugdach zu befestigen. Die Montagestruktur kann auch dazu dienen, andere Bauteile am Innenhimmel zu befestigen, beispielsweise eine Führungsschiene für ein Schiebedach. Als Montagestruktur wurden bisher immer separate Bauteile verwendet, beispielsweise Klammern, Rahmen oder ähnliches, die entweder nachträglich an der Trägerschicht befestigt oder bei deren Herstellung in diese eingegossen wurden. Nachteilig ist hierbei der hohe Aufwand sowohl für die Herstellung und Bereitstellung der separaten Bauteile als auch für deren Anbringung am Innenhimmel.

Die DD 257 035 A5 zeigt eine Montagestruktur, bei der die Trägerschicht eine Ausnehmung aufweist, in der ein Metallkörper ausgeracht wird, ausch den sich ein Fortsatt des Innenhimmels Ostrecken kann.

Die Aufgabe der Erfindung besteht somit darin, ein Dachteil zu schaffen, das mit geringerem Aufwand an anderen Bauteilen montiert werden kann oder die Montage von anderen Bauelementen an ihm ermöglicht.

Zu diesem Zweck ist erfindungsgemäß bei einem Dachteil der eingangs genannten Art mit den Merkmalen des Anspruchs 1 vorgesehen. Ein solcher Hinterschnitt, der insbesondere nach Art einer Nut ausgebildet sein kann, ermöglicht es, ohne zwischengesetzte Befestigungsteile andere Bauelemente am Dachteil zu befestigen oder das Dachteil selbst zu montieren. Die Erfindung basiert dabei auf der Erkenntnis, daß bei geeigneter Ausgestaltung des Formwerkzeugs, das zur Herstellung der Trägerschicht verwendet wird, ein solcher Hinterschnitt mit extrem geringem Aufwand hergestellt werden kann. Dafür sind keine Schieber oder ähnliches erforderlich, die bisher im Stand der Technik für die Herstellung eines Hinterschnitts erforderlich waren und aufgrund des mit ihnen verbundenen, hohen Aufwandes dazu geführt haben, daß die Fachwelt es bisher nicht in Betracht gezogen hat, an einem Dachteil einen Hinterschnitt vorzusehen.

Gemäß einer Ausführungsform der Erfindung ist vorgesehen, daß die Trägerschicht eine Öffnung aufweist und sich die Nut um die Öffnung herum erstreckt. Die umlaufende Nut kann zur sicheren Anbringung eines in die Öffnung eingesetzten Bauelementes verwendet werden.

Die Nut kann sich auch entlang dem Rand des Trägerteils erstrecken. Auf diese Weise kann der Rand des Trägerteils mit minimalem Aufwand beispielsweise an einer Führungsschiene eines Schiebedachs verankert werden.

Es können auch zwei einander in einem Abstand gegenüberliegende Hinterschnitte vorgesehen sein, die parallel zueinander verlaufen. Zwischen die beiden einander gegenüberliegenden Hinterschnitte kann eine Schiene eingeschoben werden, die dann ohne weitere Maßnahmen sicher an der Trägerschicht verankert ist.

Gemäß einer Ausführungsform der Erfindung ist vorgesehen, daß auf der Trägerschicht eine Dekorationsschicht aufgebracht ist, die sich über den Hinterschnitt erstreckt. Dies gewährleistet, daß das Ende der Dekorationsschicht nicht sichtbar ist, da es von dem in den Hinterschnitt eingreifenden Bauelement verdeckt wird.

Gemäß einer Ausführungsform weist die Dekorationsschicht angrenzend an den Hinterschnitt eine Schnittkante auf, die frei von Material der Trägerschicht ist. Eine solche saubere Schnittkante kann erhalten werden, indem die Dekorationsschicht im Bereich des Hinterschnitts erst nach der Herstellung der Trägerschicht abgeschnitten wird. Während des Aushärtens der Trägerschicht erstreckt sich die Dekorationsschicht bis in den Werkzeugspalt zwischen zwei Werkzeugteilen des Formwerkzeugs, wo sie zur Abdichtung dienen kann.

Die oben angegebene Aufgabe wird auch gelöst durch ein Verfahren zur Herstellung eines Dachteils, insbesondere eines Innenhimmels für ein Fahrzeugdach, mittels der folgenden Schritte: Zunächst wird ein Formwerkzeug bereitgestellt, das aus einem ersten und einem zweiten Werkzeugteil besteht, wobei am ersten Werkzeugteil ein elastisch verformbarer Körper vorgesehen ist, der zwischen einer Ausgangsstellung, in der er in einer Richtung senkrecht zur allgemeinen Erstreckungsrichtung des Dachteils gestreckt ist, und einer Arbeitsstellung verformbar ist, in der er mindestens einen Vorsprung bildet, der parallel zur allgemeinen Erstreckungsrichtung des Dachteils und im Abstand vom ersten Werkzeugteil verläuft. Dann wird ein aushärtbares Material in das Formwerkzeug eingebracht, das zur Trägerschicht aushärtet, während sich der verformbare Körper in der Arbeitsstellung befindet, so daß der von ihm gebildete Vorsprung als Hinterschnitt in der Trägerschicht abgeformt wird. Anschließend wird das Formwerkzeug geöffnet, und der verformbare Körper wird in die Ausgangsstellung überführt, so daß er den Hinterschnitt in der Trägerschicht freigibt. Abschließend wird das Dachteil aus dem Formwerkzeug entnommen. Mittels des elastisch verformbaren Körpers kann mit geringem Aufwand der Hinterschnitt in der Trägerschicht ausgebildet werden. Das Formwerkzeug hat einen einfachen und somit kostengünstigen Ausbau, was sich in niedrigen Stückkosten für das Dachteil niederschlägt.

Vorzugsweise wird der verformbare Körper beim Schließen des Formwerkzeugs automatisch in die Arbeitsstellung überführt, da er an dem zweiten Werkzeugteil anliegt. Bei dieser Ausführungsform sind keine externen Betätigungsvorrichtungen für den elastisch verformbaren Körper erforderlich, was zu besonders geringen Kosten führt. Weiterhin ermöglicht es der elastische Körper ohne weiteren Aufwand, eine Durchgangsöffnung in der Trägerschicht auszubilden.

Alternativ kann vorgesehen sein, daß der verformbare Körper beim Schließen des Formwerkzeugs von einer Betätigungsvorrichtung aus der Ausgangsstellung in die Arbeitsstellung überführt wird, so daß er bei geschlossenem Formwerkzeug vom zweiten Werkzeugteil beabstandet ist. Diese Ausführungsform ist besonders dann vorteilhaft, wenn der elastisch verformbare Körper keine Durchgangsöffnung in der Trägerschicht ausbilden soll.

Der verformbare Körper besteht vorzugsweise aus Gummi und ist mit einem Druckfluid gefüllt. Auf diese Weise wird mit sehr geringem Aufwand die gewünschte elastische Verformbarkeit des Körpers bei gleichzeitiger Kompressionsfestigkeit erhalten.

Gemäß der bevorzugten Ausführungsform ist vorgesehen, daß in das geöffnete Formwerkzeug eine Dekorationsschicht eingelegt wird, daß auf die Dekorationsschicht ein aushärtbares Material aufgebracht wird, das beim Aushärten aufschäumt, und daß anschließend das Formwerkzeug geschlossen wird. Auf diese Weise verbindet sich die Dekorationsschicht unmittelbar mit der Trägerschicht, wobei die Trägerschicht, bedingt durch das Aufschäumen, ein vergleichsweise geringes Gewicht hat.

Vorteilhafte Ausgestaltungen der Erfindung ergeben sich aus den Unteransprüchen.

Die Erfindung wird nachfolgend anhand verschiedener Ausführungsformen beschrieben, bei denen das Dachteil ein Innenhimmel für ein Fahrzeugdach ist. Die Erfindung kann aber auch auf andere Dachteile angewendet werden. In den beigefügten Zeichnungen zeigen:
- Figur 1 in einer schematischen pe rspektivischen Ansicht ein Fahrzeugdach;
- Figur 2 eine Schnittansicht entlang der Ebene II-II von Figur 1, in der ein Innenhimmel gemäß einer ersten Ausführungsform gezeigt ist;
- Figur 3 in einer schematischen, perspektivischen Ansicht ein weiteres Fahrzeugdach;
- Figur 4 eine Schnittansicht entlang der Ebene IV-IV von Figur 3, in der ein Innenhimmel gemäß einer zweiten Ausführungsform gezeigt ist;
- Figur 5 in einer schematischen, abgebrochenen Ansicht ein Formwerkzeug in geöffnetem Zustand, das zur Herstellung eines Innenhimmels verwendet werden kann;
- Figur 6 das Formwerkzeug von Figur 5 in geschlossenem Zustand, wobei eine Trägerschicht abgeformt wird;
- Figur 7 das Formwerkzeug von Figur 6 im wieder geöffneten Zustand mit hergestelltem Innenhimmel;
- Figur 8 in einer Ansicht entsprechend derjenigen von Figur 5 ein weiteres Formwerkzeug;
- Figur 9 das Formwerkzeug von Figur 8 in geschlossenem Zustand, wobei eine Trägerschicht abgeformt wird;
- Figur 10 das Formwerkzeug von Figur 9 im wieder geöffneten Zustand mit hergestelltem Innenhimmel; und
- Figur 11 in einer Ansicht entsprechend derjenigen von Figur 4 einen Innenhimmel gemäß einer dritten Ausführungsform.

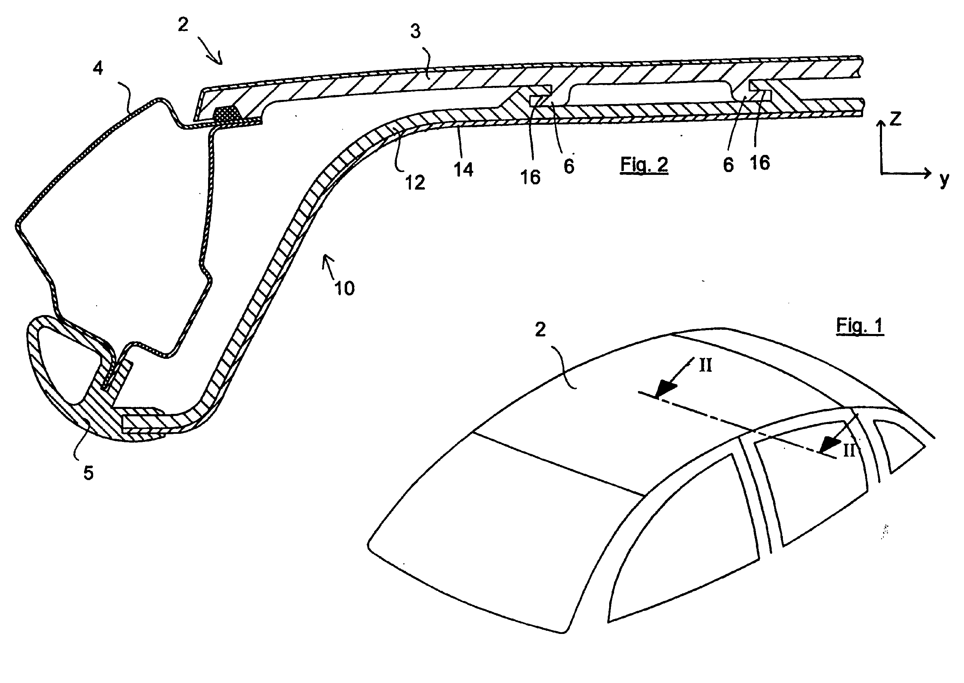

In Figur 1 ist ein Fahrzeugdach 2 zu sehen, dessen Aufbau sich im Detail aus Figur 2 ergibt. Das Fahrzeugdach 2 weist eine Außenschale 3 auf, die mit einem Längsholm 4 einer Fahrzeugkarosserie verbunden ist. Am Längsholm 4 ist ein Dichtungsprofil 5 angebracht, in das ein Rand eines Innenhimmels 10 eingesteckt ist. Der Innenhimmel besteht aus einer Trägerschicht 12 und einer Dekorationsschicht 14. Die Trägerschicht 12 besteht aus einem ausgehärteten Kunststoffmaterial, das möglicherweise vor dem Aushärten aufgeschäumt wurde. Die Dekorationsschicht 14 besteht beispielsweise aus einem Vlies und ist fest mit der Trägerschicht 12 verbunden. Die Dekorationsschicht 14 ist der Teil des Innenhimmels, der für einen Fahrzeuginsassen sichtbar ist.

Der Innenhimmel 10 und genauer gesagt die Trägerschicht 12 ist mit der Außenschale 3 des Fahrzeugdachs 2 durch mehrere Hinterschnitte 16 verbunden, die nach Art einer Nut ausgebildet sind und in die Haltevorsprünge 6 der Außenschale 3 eingreifen. Die von den Hinterschnitte 16 gebildeten Nuten weisen einen Boden auf, der sich etwa senkrecht zur Erstreckungsrichtung der Trägerschicht 12 erstreckt, und zwei einander gegenüberliegende Seitenflächen, die sich etwa parallel zur Erstreckungsrichtung der Trägerschicht erstrecken. Bedingt durch die Anordnung der Hinterschneidungen und die Verwendung von zwei einander gegenüberliegenden Hinterschneidungen ist der Innenhimmel 10 sowohl in z-Richtung als auch in y-Richtung des Fahrzeugs an der Außenschale 3 des Fahrzeugdachs 2 befestigt, ohne daß separate Befestigungsteile verwendet werden müssen.

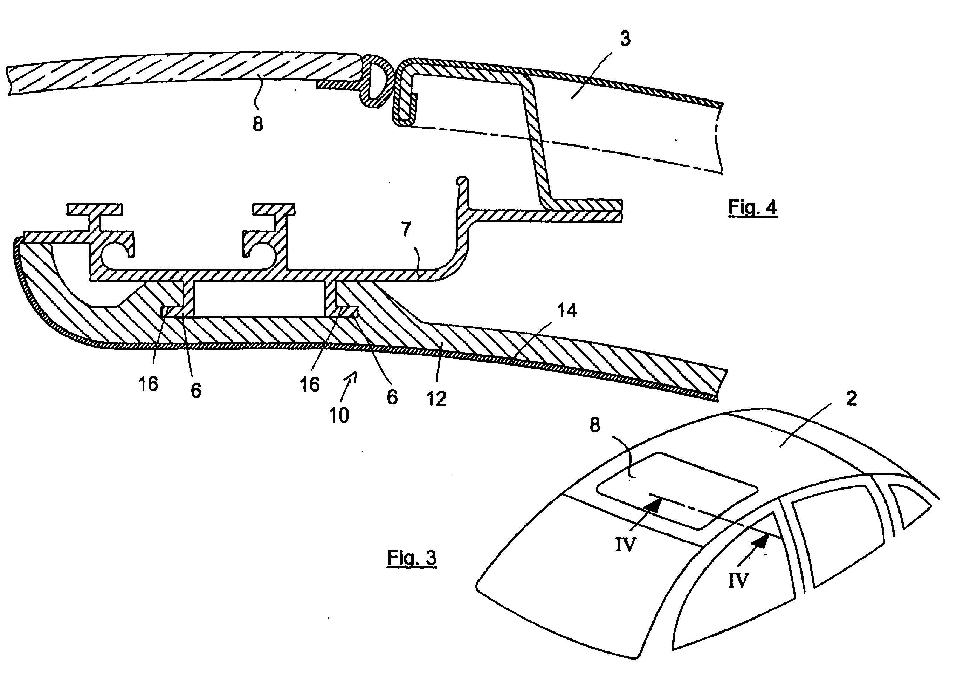

In den Figuren 3 und 4 ist ein Fahrzeugdach mit einem Innenhimmel gemäß einer zweiten Ausführungsform gezeigt. Für die Bauteile, die von der in den Figuren 1 und 2 gezeigten ersten Ausführungsform bekannt sind, werden dieselben Bezugszeichen verwendet, und es wird auf die obigen Erläuterungen verwiesen.

Im Unterschied zur ersten Ausführungsform wirken bei der zweiten Ausführungsform die beiden Hinterschnitte 16 mit einer Führungsschiene 7 zusammen, die Teil eines Schiebedachsystems ist, das einen verschiebbaren Deckel 8 aufweist.

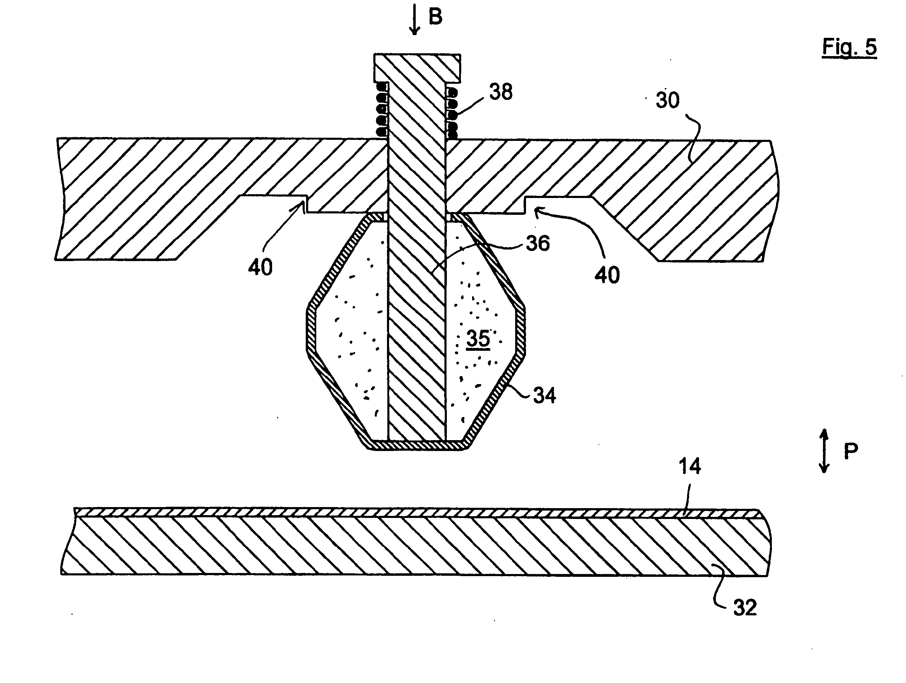

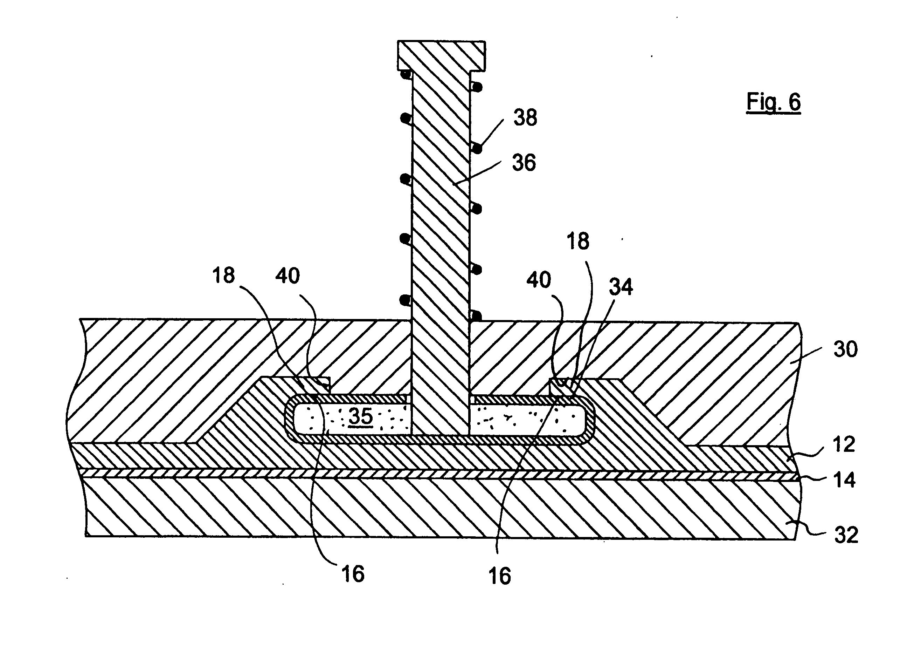

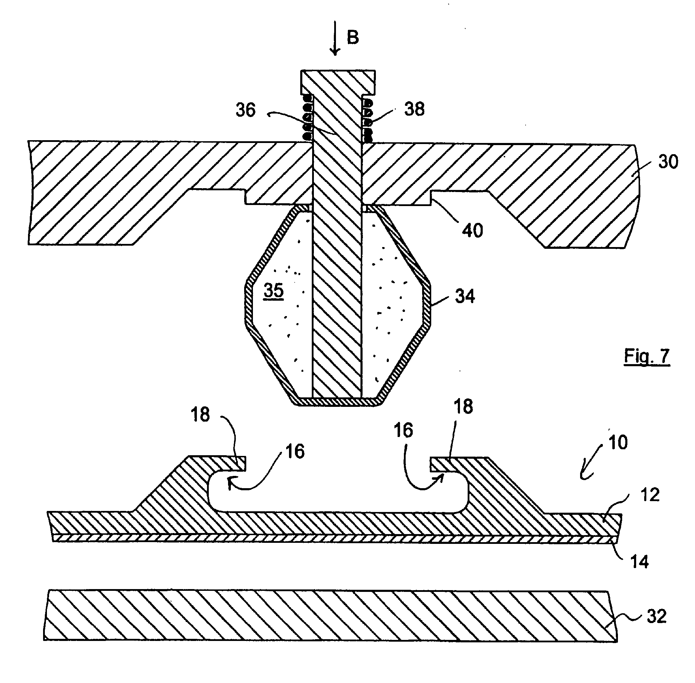

Nachfolgend wird anhand der Figuren 5 bis 7 die Herstellung des Innenhimmels 10 beschrieben. Der Innenhimmel 10 wird in einem Formwerkzeug hergestellt, von dem in den Figuren 5 bis 7 schematisch ein erstes Werkzeugteil 30 sowie ein zweites Werkzeugteil 32 gezeigt sind. Die beiden Werkzeugteile können relativ zueinander entlang einer Richtung P zwischen einem geöffneten Zustand, der in den Figuren 5 und 7 gezeigt ist, und einem geschlossenen Zustand verstellt werden, der in Figur 6 gezeigt ist.

Am ersten Werkzeugteil 30 ist auf der Seite des Formhohlraums des Formwerkzeugs ein elastisch verformbarer Körper 34 angebracht. Dieser besteht aus Gummi und ist in seinem Inneren mit einem Druckfluid 35 gefüllt. Durch das Innere des Körpers 34 hindurch erstreckt sich eine Stange 36, die auch das erste Werkzeugteil 30 bis zur Außenseite des Formwerkzeugs durchquert. Auf der Außenseite ist eine Druckfeder 38 vorgesehen, welche die Stange 36 aus dem Werkzeugteil 30 herauszudrücken sucht, sowie eine schematisch angedeutete Betätigungsvorrichtung B, die der Druckfeder 38 entgegenwirkt. Der Körper hat in seiner Ruhestellung, wenn keine äußeren Kräfte auf ihn einwirken, die in Figur 6 gezeigte, vorgeformte Gestalt mit rechteckigem Querschnitt, in welcher der Körper eine gewisse Eigenstabilität hat. In der Ausgangsstellung des Formwerkzeugs, die in Figur 5 gezeigt ist, drückt die Betätigungsvorrichtung B die Stange 36 in den Formhohlraum hinein, so daß der elastisch verformbare Körper 34 in der Richtung P, also etwa senkrecht zur Erstreckungsrichtung des Formhohlraums, gestreckt wird. Er hat dabei eine allgemein rhombusförmige Gestalt. Um die Stange 36 herum ist am ersten Werkzeugteil 30 ein Absatz 40 ausgebildet, dessen Funktion später erläutert wird.

Zur Herstellung des Innenhimmels 10 wird zunächst die Dekorationsschicht 14 auf dem unteren Werkzeugteil 32 ausgebreitet. Dann wird ein aushärtbares Material auf die Dekorationsschicht 14 aufgebracht, und das Formwerkzeug wird geschlossen. Gleichzeitig gibt die Betätigungsvorrichtung B die Stange 36 frei, so daß der Körper 34 sich in seine abgeplattete Ruhestellung (siehe Figur 6) zurückzieht, welche der Arbeitsstellung des Formwerkzeugs entspricht. In der Arbeitsstellung hat der Körper 34 einen allgemein rechteckigen Querschnitt, und er steht mit seinen Außenrändern über den Absatz 40 hinaus, so daß dort das Material der Trägerschicht nach Art einer überstehenden Nase 18 abgeformt wird und die Hinterschnitte 16 gebildet werden.

Das in das Formwerkzeug eingefüllte, aushärtbare Material verbindet sich mit der Dekorationsschicht 14 und härtet aus. Die dabei abgeformten Hinterschnitte 16 sind mit abgerundeten Innenkanten versehen, da ihre Gestalt von dem in gewissen Grenzen nachgiebigen Körper 34 bestimmt wird. Dies stellt jedoch keinen Nachteil dar; die bei der Verwendung von Schiebern erzielbaren scharfen Kanten im Bereich der Hinterschnitte 16 sind nicht erforderlich. Es ist jedoch möglich, den Körper 34 mit weniger abgerundeten Außenkanten auszuführen als in den Zeichnungen gezeigt.

Beim Öffnen des Formwerkzeugs (siehe Figur 7) wird die Stange 36 mittels der Betätigungsvorrichtung B wieder in den Formhohlraum hineingedrückt, so daß der elastisch verformbare Körper 34 aus seiner parallel zur Erstreckungsrichtung des Formhohlraums langgestreckten Arbeitsstellung wieder in die Ausgangsstellung zurückgebracht wird. Dabei wird der Körper 34 unter den Nasen 18 herausgezogen, so daß der fertig abgeformte Innenhimmel 10 freigegeben wird und aus dem Formwerkzeug entnommen werden kann.

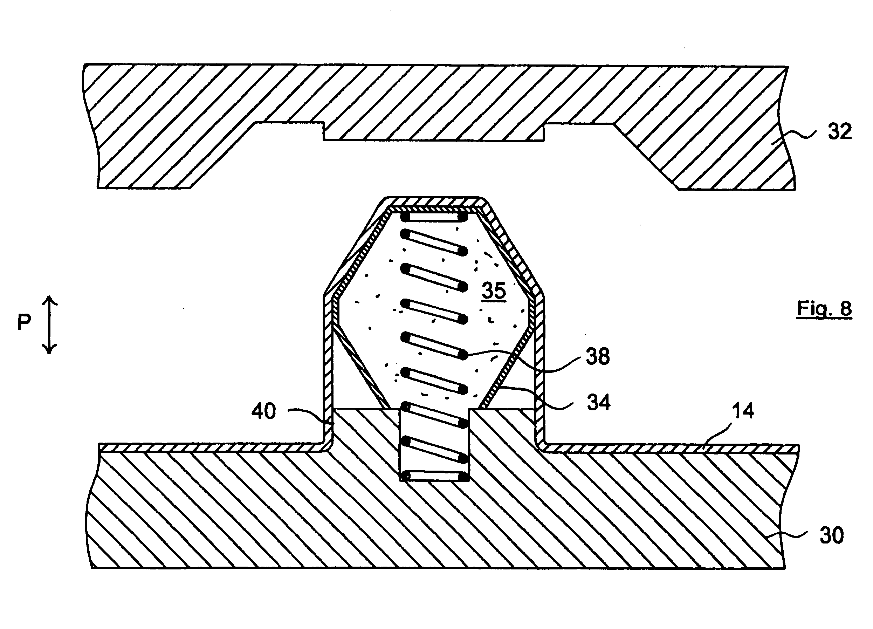

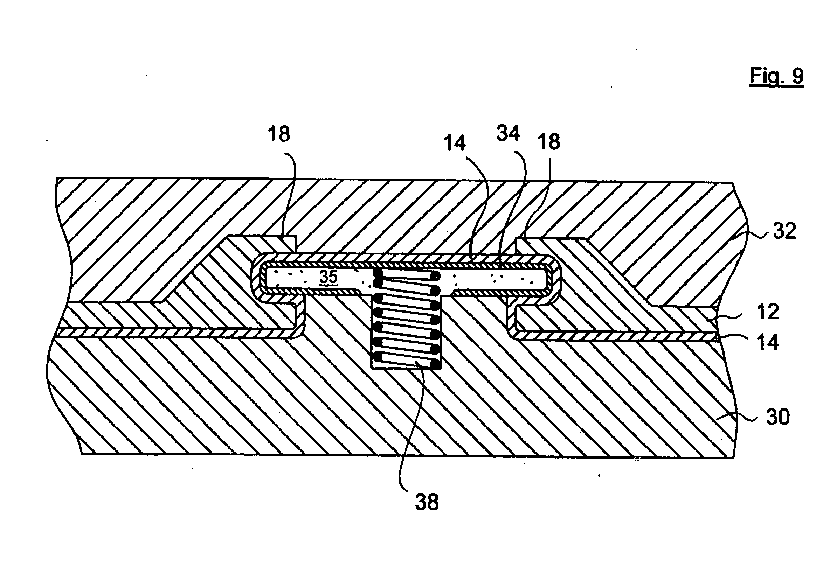

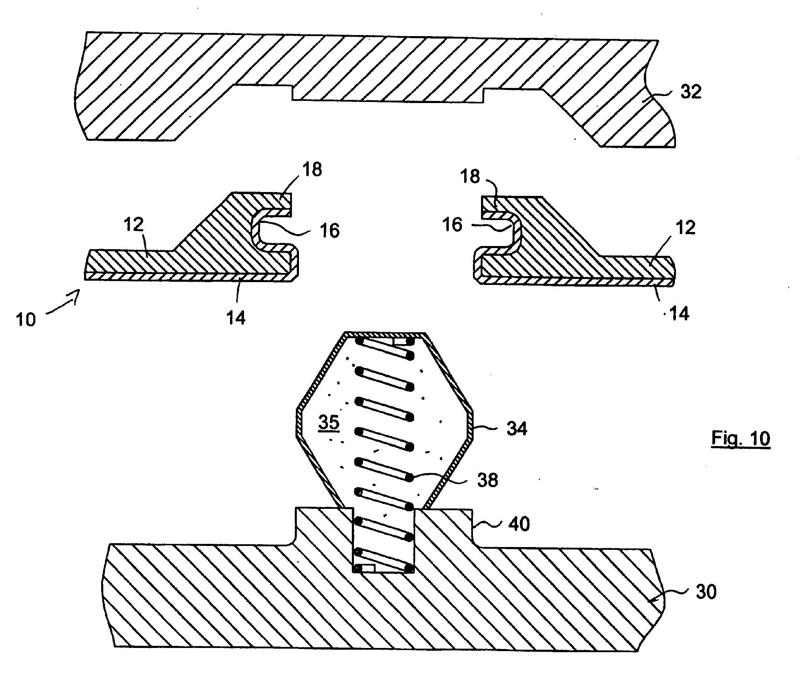

In den Figuren 8 bis 10 ist eine alternative Ausgestaltung des Formwerkzeugs gezeigt, mittels der ein Innenhimmel mit Durchgangsöffnung hergestellt werden kann, an deren Rand der Hinterschnitt 16 ausgebildet ist. Der wesentlichste Unterschied zu dem in den Figuren 5 bis 7 dargestellten Formwerkzeug besteht darin, daß keine Stange 36 und keine Betätigungsvorrichtung B erforderlich sind, um den elastisch verformbaren Körper 34 aus seiner in den Figuren 8 und 10 gezeigten Ausgangsstellung in die in Figur 9 gezeigte Arbeitsstellung zu überrühren. Da eine Durchgangsöffnung im Innenhimmel 10 erzeugt werden soll, gelangt der elastisch verformbare Körper 34 beim Schließen des Formwerkzeugs in Anlage an das zweite Werkzeugteil 32, von welchem er aus der Ausgangsstellung in die Arbeitsstellung gedrückt wird.

Ein weiterer Unterschied gegenüber dem in den Figuren 5 bis 7 beschriebenen Formwerkzeug besteht darin, daß im vorliegenden Fall die Dekorationsschicht 14 auf dem ersten Werkzeugteil 30 angeordnet wird und sich über den verformbaren Körper 34 erstreckt. Bei geschlossenem Formwerkzeug dient die Dekorationsschicht 14 im Bereich des verformbaren Körpers 34 zur Abdichtung am zweiten Werkzeugteil 32.

Nach dem Aushärten der Trägerschicht 12 wird die Dekorationsschicht 14 im Bereich der Durchgangsöffnung weggeschnitten. Dabei ergibt sich eine saubere Schnittkante, die nicht vom Material der Trägerschicht 12 verunreinigt ist. Die Dekorationsschicht 14 erstreckt sich, wie in Figur 10 zu sehen ist, durch die Hinterschnitte 16 hindurch, so daß die gebildeten Schnittkanten leicht von einem in die Hinterschnitte eingesetzten Bauteil verdeckt werden können.

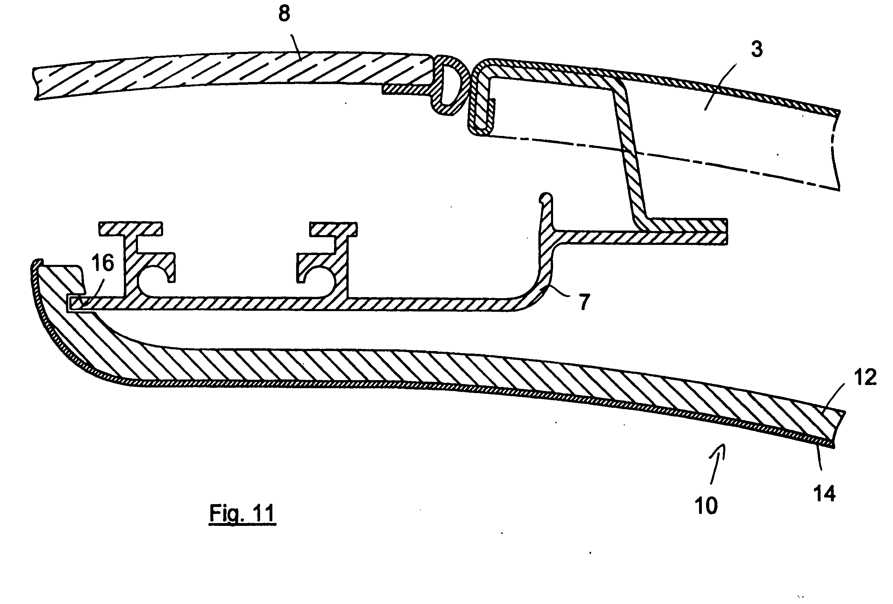

In Figur 11 ist ein Innenhimmel 10 gemäß einer dritten Ausführungsform gezeigt. Im Unterschied zur ersten und zur zweiten Ausführungsform wird hier nur ein einziger Hinterschnitt 16 verwendet, in den ein Steg der Führungsschiene 7 eingesetzt wird. Der Hinterschnitt 16 der dritten Ausführungsform kann dadurch erzielt werden, daß der verformbare Körper 34 nur einseitig über einen Absatz 40 an einem Werkzeugteil hinausragt.

### Bezugszeichenliste:

- 2:: Fahrzeugdach
- 3:: Außenschale
- 4:: Längsholm
- 5:: Dichtungsprofil
- 6:: Haltevorsprünge
- 7:: Führungsschiene
- 8:: Deckel
- 10:: Innenhimmel
- 12:: Trägerschicht
- 14:: Dekorationsschicht
- 16:: Hinterschnitt
- 30:: erstes Werkzeugteil
- 32:: zweites Werkzeugteil
- 34:: elastisch verformbarer Körper
- 35:: Druckfluid
- 36:: Stange
- 38:: Druckfeder
- 40:: Absatz
- B:: Betätigungsvorrichtung

## Patentansprüche

1. Dachteil, insbesondere Innenhimmel (10) für ein Fahrzeugdach, mit einer Trägerschicht (12), die aus einem ausgehärteten Material besteht und eine Montagestruktur (16) aufweist, **dadurch gekennzeichnet, daß** die Montagestruktur durch mindestens einen von einem Formwerkzeug abgeformten Hinterschnitt (16) gebildet ist und der Hinterschnitt (16) nach Art einer Nut ausgebildet ist, wobei die Nut einen Boden hat, der sich etwa senkrecht zur Erstreckungsrichtung der Trägerschicht (12) erstreckt, und zwei Seitenflächen, die einander gegenüberliegen und sich etwa parallel zur Erstreckungsrichtung der Trägerschicht (12) erstrecken.

2. Dachteil nach Anspruch 1, **dadurch gekennzeichnet, daß** die Trägerschicht (12) eine Öffnung aufweist und sich die Nut (16) um die Öffnung herum erstreckt.

3. Dachteil nach Anspruch 1, **dadurch gekennzeichnet, daß** sich die Nut (16) entlang dem Rand des Trägerteils (12) erstreckt.

4. Dachteil nach Anspruch 1, **dadurch gekennzeichnet, daß** zwei einander in einem Abstand gegenüberliegende Hinterschnitte (16) vorgesehen sind, die parallel zueinander verlaufen.

5. Dachteil nach einem der vorhergehenden Ansprüche, **dadurch gekennzeichnet, daß** auf der Trägerschicht (12) eine Dekorationsschicht (14) aufgebracht ist, die sich über den Hinterschnitt (16) erstreckt.

6. Dachteil nach Anspruch 5, **dadurch gekennzeichnet, daß** die Dekorationsschicht (14) angrenzend an den Hinterschnitt (16) eine Schnittkante aufweist, die frei von Material der Trägerschicht ist.

7. Verfahren zur Herstellung eines Dachteils, insbesondere eines Innenhimmels für ein Fahrzeugdach, mittels der folgenden Schritte:
- es wird ein Formwerkzeug (30, 32) bereitgestellt, das aus einem ersten und einen zweiten Werkzeugteil (30, 32) besteht, wobei am ersten Werkzeugteil (30) ein elastisch verformbarer Körper (34) vorgesehen ist, der zwischen einer Ausgangsstellung, in der er in einer Richtung senkrecht zur allgemeinen Erstreckungsrichtung des Dachteils (10) gestreckt ist, und einer Arbeitsstellung verformbar ist, in der er mindestens einen Vorsprung bildet, der parallel zur allgemeinen Erstreckungsrichtung des Dachteils (10) und im Abstand vom ersten Werkzeugteil (30) verläuft;
- es wird ein aushärtbares Material in das Formwerkzeug (30, 32) eingebracht, das zur Trägerschicht (12) aushärtet, während sich der verformbare Körper in der Arbeitsstellung befindet, so daß der von ihm gebildete Vorsprung als Hinterschnitt (16) in der Trägerschicht abgeformt wird;
- das Formwerkzeug (30, 32) wird geöffnet, und der verformbare Körper (34) wird in die Ausgangsstellung überführt, so daß er den Hinterschnitt (16) in der Trägerschicht freigibt;
- das Dachteil (10) wird aus dem Formwerkzeug (30, 32) entnommen.

8. Verfahren nach Anspruch 7, **dadurch gekennzeichnet, daß** der verformbare Körper (34) beim Schließen des Formwerkzeugs (30, 32) automatisch in die Arbeitsstellung überführt wird, da er an dem zweiten Werkzeugteil (32) anliegt.

9. Verfahren nach Anspruch 7, **dadurch gekennzeichnet, daß** der verformbare Körper (34) beim Schließen des Formwerkzeugs (30, 32) von einer Betätigungsvorrichtung (B) aus der Ausgangsstellung in die Arbeitsstellung überführt wird, so daß er bei geschlossenem Formwerkzeug vom zweiten Werkzeugteil (32) beabstandet ist.

10. Verfahren nach einem der Ansprüche 7 bis 9, **dadurch gekennzeichnet, daß** der verformbare Körper (34) aus Gummi besteht und mit einem Druckfluid gefüllt ist.

11. Verfahren nach einem der Ansprüche 7 bis 10, **dadurch gekennzeichnet, daß** in das geöffnete Formwerkzeug eine Dekorationsschicht (14) eingelegt wird, daß auf die Dekorationsschicht ein aushärtbares Material aufgebracht wird, das beim Aushärten aufschäumt, und daß anschließend das Formwerkzeug (30, 32) geschlossen wird.

## Claims

1. A roof component, in particular an inner liner (10) for a vehicle roof, the roof component comprising a carrier layer (12) which consists of a cured material and has a mounting structure (16), **characterized in that** the mounting structure is formed by at least one undercut (16) which is given its shape by a forming tool, and the undercut (16) is shaped in the nature of a groove, the groove having a bottom which extends approximately perpendicularly to the direction of extension of the carrier layer (12), and two side surfaces which are arranged opposite each other and extend approximately parallel to the direction of extension of the carrier layer (12).

2. The roof component according to Claim 1, **characterized in that** the carrier layer (12) has an opening and the groove (16) extends around the opening.

3. The roof component according to Claim 1, **characterized in that** the groove (16) extends along the rim of the carrier part (12).

4. The roof component according to Claim 1, **characterized in that** two opposing undercuts (16) are provided that are spaced apart from each other and extend parallel to each other.

5. The roof component according to any one of the preceding claims, **characterized in that** a decorative layer (14) is applied on the carrier layer (12), the decorative layer extending across the undercut (16).

6. The roof component according to Claim 5, **characterized in that** adjacent to the undercut (16), the decorative layer (14) has an edge of cut which is free from material of the carrier layer.

7. A method of producing a roof component, in particular an inner liner for a vehicle roof, by means of the following steps:
- a forming tool (30, 32) is provided which consists of a first and a second tool part (30, 32), an elastically deformable body (34) provided on the first tool part (30) being capable of being deformed between an initial position in which it is extended in a direction perpendicular to the general direction of extension of the roof component (10), and a working position in which it forms at least one protrusion which extends parallel to the general direction of extension of the roof component (10) and at a distance from the first tool part (30);
- a curable material is introduced into the forming tool (30, 32), the curable material curing to form the carrier layer (12) while the deformable body is in the working position, so that the protrusion formed by the body is imparted to the carrier layer so as to form an undercut (16) therein;
- the forming tool (30, 32) is opened and the deformable body (34) is transferred to the initial position, so that it frees the undercut (16) in the carrier layer;
- the roof component (10) is taken out of the forming tool (30, 32).

8. The method according to Claim 7, **characterized in that** during closing the forming tool (30, 32), the deformable body (34) is automatically transferred to the working position since it rests against the second tool part (32).

9. The method according to Claim 7, **characterized in that** during closing the forming tool (30, 32), the deformable body (34) is transferred from the initial position to the working position by an operating device (B), so that it is spaced from the second tool part (32) when the forming tool is in the closed position.

10. The method according to any one of Claims 7 to 9, **characterized in that** the deformable body (34) consists of rubber and is filled with a pressure fluid.

11. The method according to any one of Claims 7 to 10, **characterized in that** a decorative layer (14) is placed into the forming tool when open, a curable material is applied on the decorative layer and foams up during the curing process, and subsequently the forming tool (30, 32) is closed.

## Revendications

1. Elément de toit, en particulier habillage intérieur de plafond (10) pour un toit de véhicule, comportant une couche support (12) qui est constituée par un matériau durci et qui présente une structure de montage (16), **caractérisé en ce que** la structure de montage est formée par au moins une contre-dépouille (16) modelée par un outil de formage, et la contre-dépouille (16) est réalisée à la manière d'une gorge, la gorge ayant un fond qui s'étend approximativement perpendiculairement à la direction d'extension de la couche support (12), et comportant deux surfaces latérales qui sont opposées l'une à l'autre et s'étendent approximativement parallèlement à la direction d'extension de la couche support (12).

2. Elément de toit selon la revendication 1, **caractérisé en ce que** la couche support (12) présente une ouverture et la gorge (16) s'étend autour de l'ouverture.

3. Elément de toit selon la revendication 1, **caractérisé en ce que** la gorge (16) s'étend le long de la partie support (12).

4. Elément de toit selon la revendication 1, **caractérisé en ce qu'**il est prévu deux contre-dépouilles (16) opposées à distance l'une de l'autre.

5. Elément de toit selon l'une des revendications précédentes, **caractérisé en ce que** sur la couche support (12) est appliquée une couche décorative (14) qui s'étend sur la contre-dépouille (16).

6. Elément de toit selon la revendication 5, **caractérisé en ce que** la couche décorative (14) présente, de manière adjacente à la contre-dépouille (16), une arête de coupe qui est exempte de matériau de la couche support.

7. Procédé de fabrication d'un élément de toit, en particulier d'un habillage intérieur de plafond pour un toit de véhicule, au moyen des étapes suivantes :
- on fournit un outil de formage (30, 32) qui est constitué par des première et deuxième parties d'outil (30, 32), un corps (34) élastiquement déformable étant prévu sur la première partie d'outil, corps qui est déformable entre une position initiale dans laquelle il est étendu dans une direction perpendiculairement à la direction d'extension générale de la partie de toit (10) et une position de travail dans laquelle il forme au moins une saillie qui s'étend parallèlement à la direction générale d'extension de la partie de toit (10) et à distance de la première partie d'outil (30) ;
- on charge un matériau durcissable dans l'outil de formage (30, 32) qui durcit pour former la couche support (12) pendant que le corps déformable se trouve dans la position de travail, de sorte que la saillie formée par celui-ci est modelée à titre de contre-dépouille (16) dans la couche support ;
- on ouvre l'outil de formage (30, 32), et l'outil (34) déformable est amené dans la position initiale de sorte qu'il dégage la contre-dépouille (16) dans la couche support ;
- on extrait l'élément de toit (10) hors de l'outil de formage (30, 32).

8. Procédé selon la revendication 7, **caractérisé en ce que** lorsqu'on ferme l'outil de formage (30, 32), le corps déformable (34) est amené automatiquement dans la position de travail étant donné qu'il est en appui sur la deuxième partie d'outil (32).

9. Procédé selon la revendication 7, **caractérisé en ce que** lorsqu'on ferme l'outil de formage (30, 32), le corps déformable (34) est amené par un dispositif d'actionnement (B) depuis la position initiale jusque dans la position de travail, de sorte que lorsque l'outil de formage est fermé, il est à distance de la deuxième partie d'outil (32).

10. Procédé selon l'une des revendications 7 à 9, **caractérisé en ce que** le corps déformable (34) est en caoutchouc et est rempli d'un fluide sous pression.

11. Procédé selon l'une des revendications 7 à 10, **caractérisé en ce qu'**une couche décorative (14) est placée dans l'outil de formage ouvert, **en ce que** sur la couche décorative est appliquée un matériau durcissable qui mousse au durcissement, et **en ce que** l'outil de formage (30, 32) est ensuite fermé.
